# EUROPEAN PATENT SPECIFICATION

(11) **EP 1 103 179 B1**
(45) Date of publication and mention of the grant of the patent: **22.02.2006**
(21) Application number: 00310167.2
(22) Date of filing: 16.11.2000
(51) Int. Cl.: A01K 97/02

(54) **A swim feeder**
Vorrichtung zum Ausbringen von Köder in Wasser
Appareillage pour mettre à l'eau d'appât

(30) Priority: 25.11.1999 GB 9927928
(43) Date of publication of application: 30.05.2001
(73) Proprietor: Fox Design International Limited, Chelmsford, Essex CM3 8HQ (GB)
(72) Inventor: Cottis, Maxwell Stewart, Braintree, Essex CM7 9FD (GB); Little, Andy, Farnham, Surrey GU9 7BW (GB)
(74) Representative: Crouch, David John

(56) References cited:
- GB-A- 2 255 485
- GB-A- 2 304 514

## Description

The present invention relates to a swim feeder.

A bait discharge missile is disclosed in GB 2304514A. It comprises a conical or cylindrical body having a bait chamber therein. The rear of the missile is angled to provide a discharge outlet for bait and has a closure door. The door is attached to a line which is releasably held by a bead in a notch, at the rear extremity of the body, and connected to the nose core of the body close to the apex. The door can be dislodged to allow discharge of bait on impact or a retrieval jerk on the casting line. Ports admit water to the chamber, guided by fins and deflector vanes, and this surges into the chamber to purge the bait. Flight vanes with deflectable ailerons are also provided to stabilise the flight of the missile

A problem with previously proposed swim feeders is that they are quite clumsy as regards aerodynamic characteristics so that it is difficult to cast accurately, and it requires a relatively large weight to hold it in position at the bottom of the water into which it is cast in the event that the water is flowing.

The present invention seeks to obviate one or more of these disadvantages.

Accordingly, the present invention is directed to a swim feeder comprising a hollow body which receives bait when the feeder is in use, the hollow body being provided with apertures to enable bait to escape from the body, in which the body is provided with at least one fin on its exterior to assist flight of the feeder when it is cast, and in which the feeder has a tube extending through the hollow body to enable a fishing line to be threaded therethrough for an in-line attachment, reducing the risk of tangling of the line.

With the feeder being of such' a weight and construction that it will sink to the bottom of the water, in the event that the water is flowing, the said at least one fin will reduce the tendency of the feeder to roll. This enables the feeder to be made lighter overall, with reduced risk that its inertia will tear a hook from the mouth of a fish.

The flight characteristics of the swim feeder are improved still further if it is provided with a streamlined nose portion, and yet further if this nose portion is weighted.

The hollow body may comprise two generally cylindrical coaxial parts, both of which are provided with apertures and which may be rotated relative to one another about their common axis so as to vary the degree of overlap of the apertures in one of the parts with those in the other, to vary the effective size of the apertures available for escape of bait from the body.

An example of a swim feeder made in accordance with the present invention will now be described with reference to the accompanying drawings, in which:
- Figure 1: is a diagrammatic side view of the example,
- Figure 2: is an axial sectional view of the example shown in Figure 1,
- Figure 3: shows an end view of the example shown in Figure 1, and
- Figure 4: shows a cross-sectional view of the central body portion of a modified form of construction which embodies the present invention.

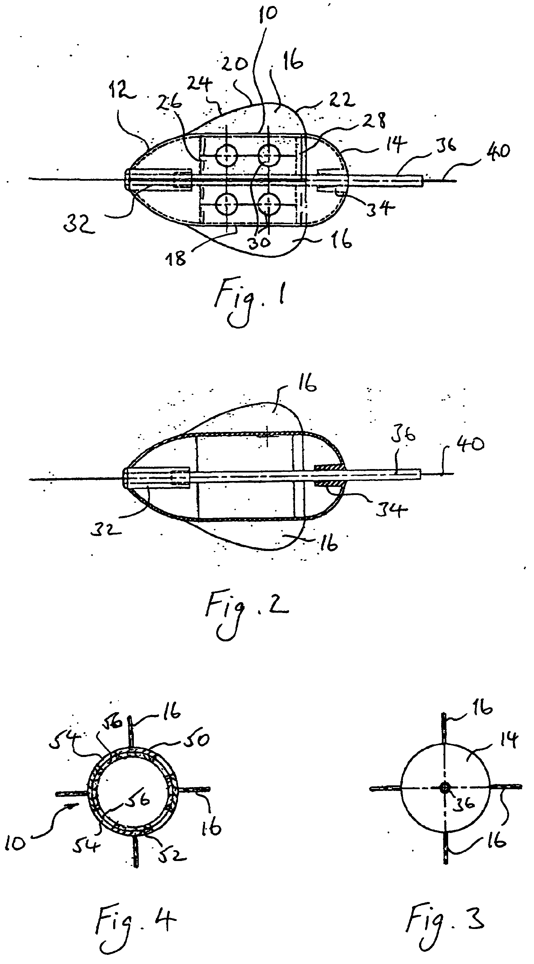

The swim feeder shown in Figures 1 to 3 comprises a generally cylindrical tubular central body portion 10 which is made of synthetic plastics material, a streamlined nose portion 12 made of the same material, and a rear hemispherical body portion 14 also made of the same material.

Four external fins 16 are moulded integrally with the central body portion 10. These fins are spaced apart uniformly around the outside of the central body portion 10 so that adjacent fins are at right angles to one another. Each fin extends away from the body portion 10 in a plane which includes the axis thereof. Each fin has a straight edge 18 adjacent to the body portion 10, and an arcuate outer edge 20.

The arcuate outer edge 20 has a generally short radius of curvature at its end 22 further from the nose portion 12 and a portion 24 of relatively large radius of curvature at the end of the fin which is closer to the nose portion 12, so that the fin tapers in the direction towards the nose portion 12.

The nose and rear portions 12 and 14 of the feeder fit on to the central body portion 10 by means of respective collars 26 and 28 which form a tight fit.

The central body portion 10 is formed with holes 30 in its side wall.

The nose portion 12 is provided with a tubular rubber insert 32 extending along the axis of the central portion 10.

The centre of the rear portion 14 is provided with a tubular collar portion 34 also extending along the axis of the central portion 10.

An elongate tube 36 of synthetic plastics material extends through the collar portion 34 and into an interior end of the rubber insert 32.

A leadweight may be inserted into the insert 32.

When the swim feeder is prepared for use, the rear portion 14 of the feeder is pulled away from the central portion 10 and slid along the tube 36. Bait, which may be in the form of meal or rusk or breadcrumbs or any other suitable ingredient is tipped into the central body portion 10, with the latter being held with the nose pointing downwardly. The rear portion 14 is then reengaged with the central portion 10, and a fishing line 40 is threaded through the tube 36. It may be pulled sufficiently to enable a swivel (not shown) on the line to be pulled into the insert 32. The feeder along with a hook (not shown) on the line is now cast into the water using a fishing rod (not shown). During its flight through the air at this time, the streamlined nose portion 12 and the fins 16 aid a steady streamlined flight of the feeder.

When the feeder reaches the water, it sinks and rests on the bottom of the water. The fins then resist any rolling of the feeder, especially if the water is flowing, and enable a relatively stable position of the feeder at the bottom of the water without there needing to be such a heavy weight for the feeder itself to hold it in position.

Bait now escapes through the holes 30 at a steady rate so that the region of the water around the hook has a high concentration of bait.

In the event that a fish is caught, the fins 16 act to slice through weeds and the like at the bottom of the water to reduce the likelihood that the fish will become entangled. In the event that the line is broken, and in the event that the feeder should become snagged for example in tree roots, the fish can pull the line clear from the feeder by virtue of the flexibility of the rubber insert 32.

Upon reeling in the line, the fins 16 enable the feeder to climb with a steep angle of ascent so that the feeder surfaces more quickly and is less of a drag on the line.

Numerous variations and modifications may occur to the reader without taking the resulting construction outside the scope of the present invention. To give only one example, there may be less than four fins or more than four fins spaced apart around the outside of the central body portion 10. Instead of having a body with holes in its side wall, the feeder may comprise a body in the form of a frame or cage. A tapered rubber bush (not shown) may be provided at the rear end of the feeder to reduce the likelihood of tangling of the line where it exits the rear of the feeder.

The central body portion 10 may comprise two generally cylindrical coaxial parts 50 and 52 frictionally fitted one within the other as shown in Figure 4. Each part 50 and 52 is provided with apertures 54 and 56. The parts 50 and 52 may be rotated relative to one another about the axis of the central part 10 so as to vary the overlap between the apertures 54 and 56. This varies the effective size of the apertures available for the escape of bait from the interior of the part 10, thus enabling the rate of release of bait from the feeder to be varied.

## Claims

1. A swim feeder comprising a hollow body (10) which receives bait when the feeder is in use, the hollow body being provided with apertures (54,56) to enable bait to escape from the body (10), in which the body (10) is provided with at least one fin (16) on its exterior to assist flight of the feeder when it is cast, **characterised in that** it has a tube (36) extending through the hollow body (10) to enable a fishing line (40) to be threaded therethrough for an in-line attachment, reducing the risk of tangling of the line (40).

2. A swim feeder according to claim 1, **characterised in that** the hollow body (10) comprises two generally cylindrical coaxial parts (50 and 52), both of which are provided with apertures (54 and 56) and which may be rotated relative to one another about their common axis so as to vary the degree of overlap of the apertures (54 and 56) in one of the parts with those in the other, to vary the effective size of the apertures available for escape of bait from the body (10).

3. A swim feeder according to claim 1 or claim 2, **characterised in that** it is provided with a streamlined nose portion (12).

4. A swim feeder according to claim 3, **characterised in that** the nose portion (12) is weighted.

5. A swim feeder according to any preceding claim, **characterised in that** the body (10) comprises two generally cylindrical coaxial parts (50 and 52), both of which are provided with apertures (54 and 56) and which may be rotated relative to one another about their common axis so as to vary the degree of overlap of the apertures in one of the parts with those in the other, to vary the effective size of the apertures available for such escape.

## Patentansprüche

1. Schwimmende Abgabevorrichtung, die einen Hohlkörper (10) umfasst, der Köder aufnimmt, wenn die Abgabevorrichtung in Gebrauch ist, wobei der Hohlkörper mit Öffnungen (54, 56) versehen ist, die ermöglichen, dass Köder aus dem Körper (10) entweicht, wobei der Körper (10) an seiner Außenseite mit wenigstens einer Rippe (16) versehen ist, die den Flug der Abgabevorrichtung unterstützt, wenn sie geworfen wird, **dadurch** gekennzcichnct, dass sie ein Rohr (36) besitzt, das durch den Hohlkörper (10) verläuft, damit eine Angelleine (40) durch den Hohlkörper (10) hindurch gefädelt werden kann, um sie in einer Linie damit zu befestigen, wodurch die Gefahr eines Verwickelns der Leine (40) verringert wird.

2. Schwimmende Abgabevorrichtung nach Anspruch 1, **dadurch** gekennzcichnct, dass der Hohlkörper (10) zwei im Allgemeinen zylindrische, koaxiale Teile (50 und 52) umfasst, die beide mit Öffnungen (54 und 56) versehen sind und relativ zueinander um ihre gemeinsame Achse gedreht werden können, um so den Überlappungsgrad der Öffnungen (54 und 56) in einem der Teile mit jenen im anderen zu verändern, um so die effektive Größe der Öffnungen, die für das Entweichen von Köder aus dem Körper (10) verfügbar ist, zu verändern.

3. Schwimmende Abgabevorrichtung nach Anspruch 1 oder Anspruch 2, **dadurch** gckcnnzcichnet, dass sie mit einem stromlinienförmigen Nasenabschnitt (12) versehen ist.

4. Schwimmende Abgabevorrichtung nach Anspruch 3, **dadurch gekennzeichnet, dass** der Nasenabschnitt (12) beschwert ist.

5. Schwimmende Abgabevorrichtung nach einem vorhergehenden Anspruch, **dadurch gekennzeichnet, dass** der Körper (10) zwei im Allgemeinen zylindrische, koaxiale Teile (50 und 52) umfasst, die beide mit Öffnungen (54 und 56) versehen sind und relativ zueinander um ihre gemeinsame Achse gedreht werden können, um so den Überlappungsgrad der Öffnungen in einem der Teile mit jenen im anderen zu verändern, um **dadurch** die effektive Größe der Öffnungen, die für ein derartiges Entweichen verfügbar ist, zu verändern.

## Revendications

1. Un dispositif d'alimentation en appâts, comprenant un corps creux (10), recevant une amorce lorsque le dispositif d'alimentation est en utilisation, le corps creux étant muni d'ouvertures (54,56) afin de permettre à l'amorce de s'échapper du corps (10), dans lequel le corps (10) est muni sur sa partie extérieure d'au moins une ailette (16), afin d'aider au vol du dispositif d'alimentation lorsqu'il est largué, **caractérisé en ce qu'**il comprend un tube (36), s'étendant à travers le corps creux (10), afin de permettre à une ligne de pêche (40) d'être passée à travers lui, pour effectuer une fixation en ligne, réduisant le risque d'emmêlement de la ligne (40).

2. Un dispositif d'alimentation en appâts selon la revendication 1, **caractérisé en ce que** le corps creux (10) comprend deux parties (50 et 52) coaxiales, globalement cylindriques, les deux étant munies d'ouvertures (54 et 56) et pouvant être tournées l'une par rapport à l'autre autour de leur axe commun, de manière à modifier le degré de chevauchement des ouvertures (54 et 56) situées dans l'une des parties avec celles situées dans l'autre, pour faire varier la taille efficace des ouvertures, disponible pour faire s'échapper l'amorce du corps (10).

3. Un dispositif d'alimentation en appâts selon la revendication 1 ou la revendication 2, **caractérisé en ce qu'**il est muni d'une partie de nez (12) à forme hydrodynamique.

4. Un dispositif d'alimentation en appâts selon la revendication 3, **caractérisé en ce que** la partie de nez (12) est lestée.

5. Un dispositif d'alimentation en appâts selon l'une quelconque des revendications précédentes, **caractérisé en ce que** le corps (10) comprend deux parties (50 et 52), coaxiales, globalement cylindriques, les deux étant munies d'ouvertures (54 et 56) et pouvant être tournées l'une par rapport à l'autre autour de leur axe commun, de façon à faire varier le degré de chevauchement des ouvertures situées dans l'une des parties avec celles situées dans l'autre, pour faire varier la taille efficace des ouvertures, disponible pour un tel échappement.
